Europäisches Patentamt

(19) European Patent Office (11) Publication number: **0 141 504**

Office européen des brevets **B1**

(12) **EUROPEAN PATENT SPECIFICATION**

(45) Date of publication of patent specification: **25.11.87** (51) Int. Cl.⁴: **C 09 J 3/14, C 09 J 7/02**

(21) Application number: **84306048.4**

(22) Date of filing: **04.09.84**

(54) **Water-dispersible pressure-sensitive adhesive and tape made therewith.**

<table>
<tr><td>(30) Priority: <b>06.09.83 US 529565</b></td><td>(73) Proprietor: <b>MINNESOTA MINING AND MANUFACTURING COMPANY 3M Center, P.O. Box 33427 St. Paul, Minnesota 55133-3427 (US)</b></td></tr>
<tr><td>(43) Date of publication of application: <b>15.05.85 Bulletin 85/20</b></td><td></td></tr>
<tr><td>(45) Publication of the grant of the patent: <b>25.11.87 Bulletin 87/48</b></td><td>(72) Inventor: <b>Blake, Frederick D. c/o Minnesota Mining and Manufact. Co. 2501 Hudson Road P.O. Box 33427 St. Paul Minnesota 55133 (US)</b></td></tr>
<tr><td>(84) Designated Contracting States: <b>DE FR GB IT SE</b></td><td>(74) Representative: <b>Baillie, Iain Cameron et al c/o Ladas & Parry Isartorplatz 5 D-8000 München 2 (DE)</b></td></tr>
<tr><td>(56) References cited: <b>EP-A-0 058 382 FR-A-2 208 961 FR-A-2 447 956 US-A-4 413 080</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to water-dispersible pressure-sensitive adhesives and to normally tacky and pressure-sensitive adhesive tapes made therewith.

Papermaking and printing operations require splicing the end of one roll of paper to the beginning of another, as well as splicing together a roll after defective material is cut out. It is important that such splices be made quickly and easily, necessitating the use of an adhesive that rapidly attains maximum strength and retains it throughout subsequent operations. In an era where ecology and conservation are both vital concerns, it is important that the spliced portions not be destroyed but that they be returned to the paper mill for reprocessing; it is thus essential that the splices (particularly the adhesive which is used to make them) be water-dispersible and repulpable. This combination of requirements precludes the use of such conventional adhesives as normally tacky and pressure-sensitive rubber-resin adhesives. In the past, several water-soluble, pressure-sensitive adhesives have been devised and employed commercially, but none has been able to achieve the desired combination of physical properties and low cost.

An early adhesive used in splicing paper was polyacrylic acid, a water-soluble polymer which is rubbery in the presence of water but which becomes brittle and friable at low humidities. Sohl US—A—2,838,421 discloses a splicing tape in which related rubbery polymer adhesives are blended with polypropylene glycol to impart flexibility, particularly in low humidity environments. Double-coated paper tapes made with such adhesives have been widely used in the papermaking and printing industry; although excellent in many respects, the release from the liner interleaved in the roll of tape is adversely influenced by high ambient humidity.

Peterson US—A—3,441,430 discloses a splicing tape product in which the pressure-sensitive adhesive is a water-soluble acrylic acid:ether acrylate copolymer tackified with a liquid water-soluble plasticizer containing at least one ether linkage. Because of the ether linkage, this adhesive is inherently sensitive to oxidation, and its performance characteristics are greatly influenced by conditions to which it has previously been subjected. For example, exposure to high temperature (either before or after use in splicing) tends to reduce tackiness, flexibility, and repulpability. It is not always possible to protect the tape from such conditions.

Olson US—A—3,661,874 discloses a water-soluble pressure-sensitive adhesive made by reacting an epoxidized rubber polymer with a water-soluble secondary monoamine and tackifying the polymer with a water-soluble tackifier-plasticizer. When carefully formulated, this adhesive has outstanding physical characterisics, meeting all the requirements imposed by the papermaking industry, but the manufacturing process is complex and hence expensive.

Blake US—A—3,865,770 discloses a water-dispersible pressure-sensitive adhesive in which an acrylate:vinyl carboxylic acid copolymer is reacted with a lower secondary or tertiary alkanolamine to impart water solubility, tackifiers (e.g., rosin) or plasticizers (oily, water-soluble polyoxyethylene compounds) being added if necessary. Adhesives of this type have excellent tackiness and heat stability, are readily repulpable, and are comparatively inexpensive. Special problems arise, however, when adhesives of this type are used to splice carbonless paper, the alkanolamine tending to volatilize and migrate, defeating the effectiveness of carbonless paper to perform its intended function, either by forming a stable complex with nickel ion which would otherwise react with a dithiooxamide derivative or by neutralizing the acidic substance which would otherwise impart color to an acid-activated dye.

Blake US—A—4,413,080 discloses a water-dispersible pressure-sensitive adhesive intended for use in splicing carbonless papers. This adhesive is a blended reaction product of acrylate, acidic rosin or rosin derivative, potassium hydroxide, sodium and/or lithium hydroxide, and an oily plasticizing water-soluble polyoxyethylene compound. Although effective in many circumstances, upon exposure to elevated temperatures, the plasticizer may separate and migrate into layers of paper adjacent the splice, causing transparentization and decreased adhesion. In addition, some of the NaOH present may migrate with the plasticizer desensitizing to some extent, the color-changing ability of the carbonless paper.

## Summary of the invention

The present invention provides a water-dispersible normally tacky and pressure-sensitive adhesive having all the advantages of the adhesive of aforementioned US—A—4,413,080, together with the additional advantage that it can be used to splice carbonless paper without adversely affecting its performance. Substantially no adhesive separation occurs, even in the presence of high temperatures, pressures, and humidities.

The adhesive of the invention comprises the reaction product of

(a) 100 parts by weight of a copolymer of monomers consisting essentially of

(1) 60—85 weight percent of at least one monomeric acrylic acid ester of nontertiary alkyl alcohol having 4—14 carbon atoms and
(2) correspondingly 40—15 weight percent of vinyl carboxylic acid,

(b) 50 to 250 parts by weight of ethoxylated plasticizing components, sufficient to impart adhesion values such as to cause the adhesive to delaminate kraft paper, consisting essentially of at least one of the following:

2

(1) up to 125 parts by weight, but not so much as to cause adhesive separation, of one or more OH-functional ethoxylated plasticizers and

(2) one or more electrolyte-tolerant complex acidic esters of phosphoric acid and an ethoxylated nonionic surfactant, and

(c) alkaline hydroxide consisting essentially of

(1) sodium hydroxide, lithium hydroxide, or both sodium and lithium hydroxide in an amount sufficient to enhance shear strength and minimize bleeding but insufficient to cause separation of any OH-functional ethoxylated plasticizer present, not exceeding 0.07 hydroxyl equivalent if OH-functional ethoxylated plasticizer is the only plasticizing component present, and

(2) potassium hydroxide in an amount sufficient to promote water solubility.

Preferably, tackifying rosin or rosin derivative (especially 75—150 parts by weight) is incorporated in the adhesive to promote compatibility of the ethoxylated plasticizers with the other adhesive components and to enhance adhesion to paper.

Presently preferrsd embodiments of the invention also incorporate both OH-functional ethoxylated plasticizer and phosphoric acid ester, about 50 to 100 parts by weight of each proving highly satisfactory. In these embodiments, the total amount of sodium hydroxide and lithium hydroxide provides from 0.02 to 0.2 hydroxyl equivalent, and the potassium hydroxide provides from 0.1 to 0.6 hydroxyl equivalent. Preferred is an adhesive wheren the acrylic acid ester comprises butyl acrylate and the vinyl carboxylic acid comprises acrylic acid.

Expressed in a somewhat different manner, another preferred embodiment of the invention comprises the just described adhesive wherein the reaction product consists essentially of

(a) 100 parts by weight of a copolymer of monomers consisting essentially of

(1) 60—85 weight percent of at least one monomeric acrylic acid ester of nontertiary alkyl alcohol having 4—14 carbon atoms and

(2) correspondingly 40—15 weight percent of vinyl carboxylic acid,

(b) 100 to 250 parts by weight of ethoxylated plasticizing components, of which

(1) at least 50 parts by weight are one or more acidic esters of phosphoric acid and ethoxylated alcohol or phenol derivative and

(2) the balance is made up of one or more ethoxylated diamines, and

(c) sufficient sodium hydroxide to neutralize at least 20% of the copolymer acid function.

The phosphoric acid ester is far more electrolyte-tolerant than the OH-functional polyoxyethylene plasticizers, which were described in aforementioned US—A—4,413,080. As a result, these esters do not separate from the adhesive composition, even when present in large quantities, when the NaOH content is high, or when the adhesive is exposed to high temperatures, pressures, or humidities. The OH-functional ethoxylated plasticizers may still be used but must not be present in an amount sufficient to cause adhesive separation.

It is considered desirable to include an extremely small amount of polyamide-epichlorohydrin crosslinking resin; the presence of this specific crosslinking agent greatly improves both firmness and resistance to bleeding. If used in excessive amounts, however, the crosslinking resin will decrease water solubility and repulpability to unacceptably low levels.

As will be apparent from the ranges indicated above, substantial variations in composition are possible. To illustrate, the use of higher percentages of short-chain acrylates in a copolymer tends to increase the hardness of the adhesive, decreasing its tackiness; in such event, it is desirable to use a comparatively higher percentage of plasticizer. On the other hand, high percentages of long chain acrylates increase the tackiness of an adhesive and reduce the need for plasticizers. Similarly, the higher the percentage of vinyl carboxylic acid in the copolymer, the lower the degree of neutralization necessary to insure water-solubility. The use of such well-known acrylate monomers as iso-octyl acrylate increases the tackiness of the ultimate adhesive and improves its adhesion to paper; on the other hand, the resultant copolymer is harder to dissolve and generally requires the addition of either more rosin or more solvent than would otherwise be the case. In general, if an insufficient amount of rosin is included, ethoxylated plasticizer (if present) may tend to separate from the ionic neutralized acrylate polymer, while if too much rosin is included, the tackiness of the adhesive is reduced.

It is important to use more than one alkali metal hydroxide in connection with neutralization, the use of only sodium and/or lithium hydroxide increasing shear but tending to reduce tackiness of the adhesive to an undesirably low level. On the other hand, neutralization with only potassium hydroxide increases the tackiness of the adhesive but decreases its shear value and increases its bleeding tendency.

Test procedures

It is believed that a brief explanation of certain test procedures, used to evaluate various characteristics of water-soluble pressure-sensitive adhesives and tapes made therewith, will be helpful in understanding the invention.

Rolling ball tack

In this test an 11 mm diameter steel ball is rolled down a plane having a length of 18 cm and inclined at an angle of 21°30' to a horizontal surface on which the tape to be evaluated is positioned, adhesive side up, the adhesive thickness being at least 25 micrometers. The distance the ball rolls along the horizontal adhesive surface is measured, the tack being inversely proportional to the distance. Further details of this test are found in Test Methods for Pressure Sensitive Tapes, 7th Edition, Pressure Sensitive Tape Council, Glenview, III. 60025, Test No. PSTC-6. Generally speaking, although not always, adhesives used in the practice of this invention will have a rolling ball tack value of no more than 15 cm. Where tape is to be used in splicing rolls of paper together at speeds of perhaps 1000 m/minute (i.e., in making so-called flying splices), tack values of less than 5 cm are greatly preferred.

Certain adhesives embodying the invention yield high rolling ball tack values (greater than 15 cm), yet adhere aggressively to paper. These adhesives, which are usually considered relatively firm, would not function well in making flying splices but would function extremely well in making finished roll splices. The following test, which is useful in evaluating the ability of both tacky and firm adhesives to adhere to paper.

180° Peel adhesion to paper

A 3.175 cm. strip of kraft paper is laminated to a 5 cm×12.5 cm stainless steel test panel using a double-faced pressure-sensitive tape. One end of a 2.54 cm×25 cm strip of sample tape having a 68 g/m² kraft paper backing is then laid over the laminated kraft paper. Uniform adhesive contact is assured by quickly (1 second) passing a 2 kg roller over the 12.5 cm sample length.

The tape is then doubled back on itself and peeled from the kraft paper surface at 30.5 cm/minute, using a method generally equivalent to that described in Test PSTC-1 "Test Method for Pressure Sensitive Tapes", 7th Edition, Pressure Sensitive Tape Council, Glenview, Illinois 60025. If the tape adheres well to the kraft paper, the numerical result may be unimportant as it may reflect only the force necessary to delaminate the paper surface. In such a case, delamination should be the reported result. Preferred adhesives will cause delamination.

Shear adhesion

A 2.54 cm×2.54 cm end portion of a 2.54 cm×15 cm strip of tape, formed by coating a 25-micrometer thick layer of adhesive on 68 g/m² supercalendered kraft paper backing, is adhered to a bright annealed steel test panel and rolled down with two passes of a 2 kg roller. The panel is then clamped in a jig which is disposed at 2° to the vertical, so that the 12-5 cm free end of the tape extends downward, at an angle of 178° to the test panel, and a 1000 gram weight is attached to the tape end. The time for the tape to separate from the panel is reported in to the nearest minute, the shear strength being directly related to the elapsed time. Further details are found in the aforementioned Test Methods for Pressure-Sensitive Tapes, Test PSTC-7. For tapes made with adhesive of this invention, it is desirable to have shear time as high as possible, preferably exceeding 100 minutes, although an extremely tacky adhesive may be satisfactory if its shear time is as low as 40 minutes.

Repulpability

A 20 cm×2.54 cm strip of double-coated splicing tape is sandwiched between two 20 cm×2.54 cm strips of blotter paper* and cut into approximately 1.5 cm squares. To these squares are added a sufficient number of 1.5 cm squares of blotter paper to make a total of 15 grams, after which all the squares are placed in a Waring Blendor with 500 ml of water. After the blendor has run for 20 seconds, the stock that has splattered up the sides and onto the cover is washed back into the bottom with a water bottle. The blendor is again run for 20 seconds, washed as before, and run for a final 20 seconds. The stock is then removed from the blendor, rinsed twice with water, and made into a hand-sheet, using a large sheet mold. The sheet is couched off the mold, pressed between blotters for 1-1/2 minutes in a hydraulic press, removed, dried, and examined for any particles of unrepulped splicing tape. If no such particles are present, the tape is considered satisfactory. Further details are found in TAPPI Test UM-213.

The foregoing test does not apply to tape products where, e.g., the backing is a polyester film, which does not lend itself to repulping. Such backings are strong, however, and may be used in splicing tape, provided the loosened backing is mechanically removed from the beater.

The rolling ball tack test and repulpability test are equally applicable to transfer tapes, where the adhesive layer, (or, optionally two layers of adhesive flanking a fibrous reinforcing layer) is carried by a strippable release liner. In using such tapes, the exposed surface of the adhesive is placed in contact with a first sheet of paper, the liner stripped away, and a second sheet of paper adhered to the newly exposed adhesive surface.

*For tape having adhesive on only one side, two 20 cm×2.54 cm strips are adhered to blotter paper.

4

Plasticizer separation and carbonless paper deactivation

Since carbonless papers function by the interaction of chemical materials on two separate paper surfaces, samples for this test must be prepared using both of the papers involved. A 2.54 cm strip of the subject tape is adhered to the side of the paper opposite the coated side to be evaluated and the resulting laminate placed in a 65°C. oven for 24 hours, after which the paper is examined for plasticizer separation and absorption into the paper, as evidenced by transparentization. Each of the taped samples is then paired with a fresh sheet of the complementary paper. The paired sheets are placed in a typewriter and a message is typed over the area where the tape has been in contact with the paper. Any abnormality in the development of the carbonless image is noted.

Bleeding tendency

This test qualitatively measures the tendency of an adhesive to bleed through a paper sheet when subjected to pressure and/or elevated temperatures. Strips of double-faced tape, both adhesive coatings being on the type to be evaluated, are placed between two sheets of the paper chosen, after which several additional sheets of the paper are laid on each side of the sandwich formed. The resultant sample is placed in a platen press for 15 hours at about 10 kg/cm$^2$ pressure and 40°C and subsequently examined. Bleeding is deemed "slight" and the adhesive is considered acceptable if it bleeds no more than slightly into the first sheet and does not adhere to the second sheet if it bleeds through the first sheet and adheres only lightly to the second (i.e., blocks), it is considered less desirable but may be acceptable. Unsatisfactory adhesives adhere tightly to, and possibly bleed through, a second sheet, a condition designated "severe". Results obtained in this test will, of course, vary with the specific paper used and the ambient humidity and temperature, but comparisons of tapes run within the same set can usually be made with validity.

Description of presently preferred embodiments

It is believed that understanding of the invention will be enhanced by considering several illustrative but nonlimiting examples. In each case, an acrylate:vinyl carboxylic acid copolymer was prepared, generally as described in Ulrich US—E—24,906. The monomers to be copolymerized were dissolved in ethyl acetate and, using azobisisobutyronitrile as a catalyst, the solution held at 53°C. for 24 hours, at which time polymerization was largely completed. To the resultant viscous solution was then added sufficient methanol to reduce the solids content to about 20—22%.

A separate composition was prepared by mixing phosphoric acid ester and/or OH-functional ethoxylated plasticizer, methanol, water, and alkali metal hydroxides. When rosin or rosin derivatives are used, they are introduced into this composition. Mixing time is increased when solid rosin is present. The final admixture is a clear, colorless to amber, low viscosity solution. Appropriate amounts of the composition were blended into the acrylate:vinyl carboxylic acid copolymer, yielding a clear, substantially colorless to amber solution. This solution was coated directly on a 68 g/m$^2$ supercalendered kraft paper backing and the solvent evaporated to leave a layer of normally tacky and pressure-sensitive adhesive on the order of 25 micrometers thick. The resultant tape product was then evaluated, using the previously described test procedures.

For convenience, the examples are set forth below in tabular form, all prepared substantially in accordance with the procedure just described, parts and percentages being by weight unless otherwise noted. The effect of varying the types, ratios, and amounts of various components will be readily apparent from examining the reported data. In many instances, adhesives which perform unsatisfactorily are capable of ready modification to improve their performance significantly. The following abbreviations have been employed:

0 141 504

Acrylate monomers
    BA               butyl acrylate
    IOA              iso-octyl acrylate

Vinyl carboxylic acid monomers
    AA               acrylic acid

Rosins
    TORD           disproportionated tall oil rosin
    TORP           polymerized tall oil rosin
    WR               wood rosin
    WRH            hydrogenated wood rosin
    WRP            polymerized wood rosin

Phosphoric acid esters
    PE-510         clear to slightly hazy, viscous liquid having an aromatic hydrophobic base, a density of 1.08—1.09 $g/cm^3$, and an acid number (mg KOH/g product) to first inflection point (pH 5.5) of 49—59, available from GAF Corporation under the registered trademark "Gafac" PE-510
    RE-610         Slightly hazy, viscous liquid having an aromatic hydrophobic base, a density of 1.10—1.12 $g/cm^3$, and an acid number of 62—72, available from GAF Corporation as "Gafac" RE-610
    RS-610         Hazy, viscous liquid having an aliphatic hydrophobic base, a density of 1.04—1.06 $g/cm^3$, and an acid number of 75—85, available from GAF Corporation as "Gafac" RS-610.

OH-Functional ethoxylated plasticizers
    T/13           PEG-3 tallow aminopropylamine, available from Armak under the registered trademark "Ethoduomeen" T/13
    T/20           PEG-10 tallow aminopropylamine, available from Armak as "Ethoduomeen" T/20
    T/25           PEG-15 tallow aminopropylamine, available from Armak as "Ethoduomeen" T/25
("PEG" followed by a number refers to moles of polyoxyethylene glycol).
    I52            Ethoxylated octylphenol having an oxyethylene content of about 52%, available from GAF Corporation under the registered trademark as "Igepal" CA-520
    I62            Ethoxylated nonyl phenol having an oxyethylene content of about 63%, available from GAF Corporation as "Igepal" CO-630

| Ex. | Parts BA | Parts IOA | Parts AA | COOH equiv | NaOH OH equiv | NaOH % Copolymer COOH function | KOH OH equiv | KOH % Copolymer COOH function | H₃PO₄ type | Ester parts | OH-functional ethoxylated type | OH-functional ethoxylated parts | Rosin or rosin derivative type | Rosin or rosin derivative parts | % Polyamide: EPI-chlorohydrin crosslinker* | Rolling ball tack, cm | Shear adhesion, min. | Bleeding tendency |
|---|---|---|---|---|---|---|---|---|---|---|---|---|---|---|---|---|---|---|
| 1 | 75 | — | 25 | 0.347 | 0.208 | 60 | 0.223 | 64 | PE-510 | 231 | — | — | — | — | — | 2.9 | 38 | None |
| 2 | 75 | — | 25 | 0.347 | 0.208 | 60 | 0.223 | 64 | PE-510 | 231 | — | — | — | — | 0.031 | 1.9 | 67 | None |
| 3 | 75 | — | 25 | 0.347 | 0.208 | 60 | 0.223 | 64 | PE-510 | 231 | — | — | — | — | 0.062 | 1.9 | 117 | None |
| 4 | 75 | — | 25 | 0.347 | 0.208 | 60 | 0.223 | 64 | PE-510 | 231 | — | — | — | — | 0.093 | 2.2 | 205 | None |
| 5 | 75 | — | 25 | 0.347 | 0.208 | 60 | 0.223 | 64 | PE-510 | 231 | — | — | — | — | 0.125 | 1.9 | 215 | None |
| 6 | 75 | — | 25 | 0.347 | 0.278 | 80 | 0.223 | 64 | PE-510 | 238 | — | — | — | — | 0.125 | 2.5 | 65 | None |
| 7 | 75 | — | 25 | 0.347 | 0.347 | 100 | 0.235 | 68 | PE-510 | 243 | — | — | — | — | — | 1.6 | 88 | None |
| 8 | 75 | — | 25 | 0.347 | 0.174 | 50 | 0.186 | 54 | PE-510 | 191 | — | — | — | — | — | 2.5 | 48 | None |
| 9 | 75 | — | 25 | 0.337 | 0.139 | 40 | 0.186 | 54 | PE-510 | 191 | — | — | — | — | — | 2.9 | 38 | Slight |
| 10 | 75 | — | 25 | 0.347 | 0.139· | 40 | 0.477 | 137 | PE-510 | 80 | T/20 | — | WRH | 136 | — | 5.5 | 186 | — |
| 11 | 75 | — | 25 | 0.347 | 0.139** | 40** | 0.464 | 134 | PE-510 | 75 | I63 | 79 | WRH | 136 | — | 17.0 | 296 | — |
| 12 | 75 | — | 25 | 0.347 | 0.139 | 40 | 0.471 | 136 | PE-510 | 75 | I63 | 79 | WRH | 136 | — | 10.4 | 211 | — |
| 13 | 75 | — | 25 | 0.347 | 0.139 | 40 | 0.483 | 139 | PE-510 | 80 | I63 | 74 | WRH | 136 | — | 4.1 | 320 | — |
| 14 | 75 | — | 25 | 0.347 | 0.139 | 40 | 0.520 | 150 | PE-510 | 126 | I63 | 53 | WRH | 136 | — | 5.6 | 111 | — |
| 15 | 75 | — | 25 | 0.347 | 0.139 | 40 | 0.186 | 73 | PE-510 | 191 | — | — | — | — | — | 2.5 | 48 | None |
| 16 | 75 | — | 25 | 0.347 | 0.208 | 60 | 0.198 | 57 | PE-510 | 203 | — | — | — | — | — | 3.2 | 60 | None |
| 17 | 75 | — | 25 | 0.347 | 0.208 | 60 | 0.198 | 57 | PE-510 | 203 | — | — | — | — | 0.125 | 2.9 | 290 | None |
| 18 | 75 | — | 25 | 0.347 | 0.035 | 10 | 0.469 | 135 | PE-510 | 95 | I63 | 75 | WRH | 86 | 0.375 | 2.8 | 1270 | — |
| 19 | 75 | — | 25 | 0.347 | 0.035 | 10 | 0.469 | 135 | PE-510 | 95 | I63 | 75 | WRH | 86 | 0.50 | 2.2 | 1136 | — |
| 20 | 75 | — | 25 | 0.347 | 0.035 | 10 | 0.469 | 135 | PE-510 | 95 | I63 | 75 | WRH | 86 | 0.625 | 3.7 | 965 | — |
| 21 | 75 | — | 25 | 0.208 | 0.104 | 30 | 0.321 | 92 | PE-510 | 71 | I63 | 50 | WRH | 86 | — | 2.0 | 517 | — |

*based on total adhesive solids
**LiOH used instead of NaOH

| Ex. | Parts BA | Parts IOA | Parts AA | COOH equiv | NaOH OH equiv | NaOH % Copolymer COOH function | KOH OH equiv | KOH % Copolymer COOH function | H₃PO₄ type | Ester parts | OH-functional ethoxylated type | OH-functional ethoxylated parts | Rosin or rosin derivative type | Rosin or rosin derivative parts | % Polyamide: EPI-chlorohydrin cross-linker* | Rolling ball tack, cm | Shear adhesion, min. | Bleeding tendency |
|---|---|---|---|---|---|---|---|---|---|---|---|---|---|---|---|---|---|---|
| | | Copolymer | | | | NaOH | | KOH | $H_3PO_4$ | Ester | OH-functional ethoxylated | | Rosin or rosin derivative | | | Rolling ball tack, cm | Shear adhesion, min. | Bleeding tendency |
| 22 | 75 | — | 25 | 0.208 | 0.104 | 30 | 0.321 | 92 | PE-510 | 71 | I63 | 75 | WRH | 86 | — | 9.6 | 230 | — |
| 23 | 75 | — | 25 | 0.208 | 0.052 | 15 | 0.607 | 175 | PE-510 | 172 | T/20 | 50 | WRH | 92 | 0.125 | 2.1 | 70 | — |
| 24 | 75 | — | 25 | 0.208 | 0.035 | 10 | 0.296 | 83 | PE-510 | 47 | I63 | 75 | WRH | 86 | — | 65+ | 519+ | — |
| 25 | 75 | — | 25 | 0.208 | 0.035 | 10 | 0.321 | 92 | PE-510 | 71 | I63 | 50 | WRH | 86 | — | 15+ | 584+ | — |
| 26 | 75 | — | 25 | 0.208 | 0.035** | 10** | 0.246 | 71 | — | — | I63 | 125 | WRH | 86 | — | 12.0 | 338 | — |
| 27 | 75 | — | 25 | 0.208 | 0.035 | 10 | 0.322 | 93 | PE-510 | 71 | I63 | 75 | WRH | 86 | — | 8.5 | 177 | — |
| 28 | 75 | — | 25 | 0.208 | 0.035 | 10 | 0.357 | 103 | PE-510 | 48 | I63 | 75 | WRH | 86 | — | 8.3 | 1417 | — |
| 29 | 75 | — | 25 | 0.208 | 0.035 | 10 | 0.383 | 110 | PE-510 | 71 | I63 | 50 | WRH | 86 | 0.094 | 10.0 | 1036 | — |
| 30 | 75 | — | 25 | 0.208 | 0.035 | 10 | 0.383 | 110 | PE-510 | 71 | I63 | 75 | WRH | 86 | 0.094 | 4.7 | 890 | — |
| 31 | 75 | — | 25 | 0.208 | 0.035 | 10 | 0.401 | 116 | PE-510 | 95 | I63 | 75 | WRH | 86 | 0.125 | 3.3 | 625 | — |
| 32 | 75 | — | 25 | 0.208 | 0.035 | 10 | 0.248 | 71 | — | — | I63 | 125 | WRH | 86 | 0.156 | 8.1 | 799 | — |
| 33 | 75 | — | 25 | 0.208 | 0.017 | 5 | 0.376 | 108 | PE-510 | 48 | I63 | 75 | WRH | 86 | — | 10.8 | 340 | — |
| 34 | 75 | — | 25 | 0.208 | 0.017 | 5 | 0.401 | 116 | PE-510 | 71 | I63 | 50 | WRH | 86 | — | 16.7 | 329 | — |
| 35 | 75 | — | 25 | 0.208 | — | — | — | — | PE-510 | 80 | T/25 | 74 | — | — | — | 8.3 | 250 | — |
| 36 | 75 | — | 25 | 0.347 | 0.069 | 20 | 0.186 | 54 | PE-510 | 191 | — | — | — | — | — | 6.0 | 23 | Moderate |
| 37 | 75 | — | 25 | 0.347 | — | — | 0.394 | 114 | PE-510 | 191 | — | — | — | — | — | 2.9 | 34 | severe |
| 38 | 75 | — | 25 | 0.347 | 0.208 | 60 | 0.149 | 43 | PE-510 | 231 | — | — | — | — | — | 1.9 | 24 | — |
| 39 | 75 | — | 25 | 0.347 | 0.208 | 60 | 0.149 | 43 | PE-510 | 231 | — | — | — | — | — | 2.2 | 237 | — |
| 40 | 75 | — | 25 | 0.347 | 0.208 | 60 | 0.074 | 21 | PE-510 | 231 | — | — | — | — | — | 1.6 | 18 | — |
| 41 | 75 | — | 25 | 0.347 | 0.208 | 60 | 0.074 | 21 | PE-510 | 231 | — | — | — | — | — | 1.9 | 197 | — |
| 42 | 75 | — | 25 | 0.347 | 0.208 | 60 | — | — | PE-510 | 231 | — | — | — | — | — | 1.3 | 11 | — |

*based on total adhesive solids
**LiOH used instead of NaOH

0 141 504

| Ex. | Parts BA | Parts IOA | Parts AA | COOH equiv | NaOH OH equiv | NaOH % Copolymer COOH function | KOH OH equiv | KOH % Copolymer COOH function | H$_3$PO$_4$ type | Ester parts | OH-functional ethoxylated type | OH-functional ethoxylated parts | Rosin or rosin derivative type | Rosin or rosin derivative parts | % Polyamide: EPI-chlorohydrin cross-linker* | Rolling ball tack, cm | Shear adhesion, min. | Bleeding tendency |
|---|---|---|---|---|---|---|---|---|---|---|---|---|---|---|---|---|---|---|
| 43 | 75 | — | 25 | 0.347 | 0.208 | 60 | — | — | PE-510 | 231 | — | — | — | — | — | 1.9 | 40 | — |
| 44 | 75 | — | 25 | 0.347 | 0.208 | 60 | 0.273 | 79 | RE-610 | 228 | — | — | — | — | — | 3.2 | 16 | — |
| 45 | ·75 | — | 25 | 0.347 | 0.208 | 60 | 0.322 | 93 | RS-610 | 226 | — | — | — | — | — | 4.8 | 17 | — |
| 46 | 75 | — | 25 | 0.347 | 0.416 | 120 | — | — | PE-510 | 235 | — | — | — | — | — | 4.4 | 75 | — |
| 47 | 75 | — | 25 | 0.347 | 0.364 | 105 | — | — | PE-510 | 235 | — | — | — | — | — | 3.8 | 26 | — |
| 48 | 75 | — | 25 | 0.347 | 0.139 | 40 | 0.124 | 36 | PE-510 | 125 | T/20 | 83 | WRH | 75 | — | 2.5 | 36 | — |
| 49 | 75 | — | 25 | 0.347 | 0.139 | 40 | 0.124 | 36 | PE-510 | 125 | T/20 | 83 | WRH | 75 | — | 3.5 | 165 | — |
| 50 | 75 | — | 25 | 0.347 | 0.139 | 40 | 0.099 | 29 | PE-510 | 100 | T/20 | 83 | WRH | 75 | — | 2.9 | 77 | — |
| 51 | 75 | — | 25 | 0.347 | 0.139 | 40 | 0.074 | 21 | PE-510 | 75 | T/20 | 83 | WRH | 75 | — | 3.2 | 307 | — |
| 52 | 75 | — | 25 | 0.347 | 0.139 | 40 | 0.052 | 15 | PE-510 | 50 | T/20 | 83 | WRH | 75 | — | 10.2 | 1562 | — |
| 53 | 75 | — | 25 | 0.347 | 0.139 | 40 | 0.124 | 36 | PE-510 | 125 | T/25 | 83 | WRH | 75 | — | 2.2 | 67 | — |
| 54 | 75 | — | 25 | 0.347 | 0.139 | 40 | 0.124 | 36 | PE-510 | 125 | T/20 | 55 | WRH | 50 | — | 3.8 | 75 | — |
| 55 | 75 | — | 25 | 0.347 | 0.139 | 40 | 0.124 | 36 | PE-510 | 125 | T/20 | 28 | WRH | 25 | — | 5.1 | 63 | — |
| 56 | 75 | — | 25 | 0.347 | 0.139 | 40 | 0.124 | 36 | PE-510 | 125 | T/20 | 83 | TORP | 75 | — | 4.8 | 100 | — |
| 57 | 75 | — | 25 | 0.347 | 0.139 | 40 | 0.124 | 36 | PE-510 | 125 | T/20 | 83 | WRP | 75 | — | 4.8 | 81 | — |
| 58 | 75 | — | 25 | 0.347 | 0.139 | 40 | 0.124 | 36 | PE-510 | 125 | T/20 | 83 | TORD | 75 | — | 2.2 | 64 | — |
| 59 | 75 | — | 25 | 0.347 | 0.139 | 40 | 0.124 | 36 | PE-510 | 125 | T/20 | 83 | WR | 75 | — | 3.8 | 63 | — |
| 60 | 75 | — | 25 | 0.347 | 0.139 | 40 | 0.124 | 36 | PE-510 | 126 | T/13 | 83 | WRD | 75 | — | 3.8 | 86 | — |
| 61 | 75 | — | 25 | 0.347 | 0.174 | 50 | 0.198 | 57 | PE-510 | 203 | T/20 | 27 | WRH | 13 | — | 3.8 | 36 | — |
| 62 | 75 | — | 25 | 0.347 | 0.174 | 50 | 0.198 | 57 | PE-510 | 203 | T/20 | 27 | — | — | — | 1.9 | 29 | — |
| 63 | 75 | — | 25 | 0.347 | 0.174 | 50 | 0.198 | 57 | PE-510 | 203 | T/20 | 54 | — | — | — | 1.6 | 24 | — |

*based on total adhesive solids

| Ex. | Parts BA | Parts IOA | Parts AA | COOH equiv | NaOH OH equiv | NaOH % Copolymer COOH function | KOH OH equiv | KOH % Copolymer COOH function | H₃PO₄ type | Ester parts | OH-functional ethoxylated type | OH-functional ethoxylated parts | Rosin or rosin derivative type | Rosin or rosin derivative parts | % Polyamide: EPI-chlorohydrin crosslinker* | Rolling ball tack, cm | Shear adhesion, min. | Bleeding tendency |
|---|---|---|---|---|---|---|---|---|---|---|---|---|---|---|---|---|---|---|
| 64 | 75 | — | 25 | 0.347 | 0.139 | 40 | 0.198 | 57 | RE-610 | 211 | — | — | WRH | 68 | — | 4.1 | 29 | — |
| 65 | 75 | — | 25 | 0.347 | 0.139 | 40 | 0.296 | 114 | PE-510 | 200 | — | — | WRH | 68 | — | 3.2 | 29 | — |
| 66 | 75 | — | 25 | 0.347 | 0.139 | 40 | 0.434 | 125 | RE-610 | 198 | — | — | WRH | 68 | — | 3.2 | 34 | — |
| 67 | 75 | — | 25 | 0.347 | 0.208 | 60 | 0.356 | 103 | PE-510 | 179 | — | — | WRH | 47 | — | 7.9 | 114 | — |
| 68 | 75 | — | 25 | 0.347 | 0.208 | 60 | 0.489 | 141 | PE-510 | 179 | — | — | WRH | 94 | — | 3.0 | 100 | — |
| 69 | 75 | — | 25 | 0.347 | 0.208 | 60 | 0.623 | 179 | PE-510 | 179 | — | — | WRH | 140 | — | 2.5 | 125 | — |
| 70 | 85 | — | 15 | 0.208 | 0.208 | 100 | 0.174 | 84 | PE-510 | 180 | — | — | — | — | — | 7.0 | 19 | — |
| 71 | 80 | — | 20 | 0.278 | 0.208 | 75 | 0.174 | 63 | PE-510 | 180 | — | — | — | — | — | 3.2 | 39· | — |
| 72 | 80 | — | 20 | 0.278 | 0.208 | 75 | 0.198 | 71 | PE-510 | 205 | — | — | — | — | — | 1.6 | 10 | — |
| 73 | 70 | — | 30 | 0.416 | 0.208 | 50 | 0.223 | 54 | PE-510 | 231 | — | — | — | — | — | 3.2 | 49 | — |
| 74 | 65 | — | 35 | 0.486 | 0.208 | 43 | 0.23 | 46 | PE-510 | 231 | — | — | — | — | — | 5.1 | 42 | — |
| 75 | 60 | — | 40 | 0.555 | 0.208 | 39 | 0.223 | 40 | PE-510 | 231 | — | — | — | — | — | 8.6 | 61 | — |
| 76 | 45 | 30 | 25 | 0.347 | 0.208 | 60 | 0.223 | 64 | PE-510 | 231 | — | — | — | — | — | 3.2 | 16 | — |
| 77 | 64 | 16 | 20 | 0.278 | 0.028 | 75 | 0.174 | 63 | PE-510 | 180 | — | — | — | — | — | 2.9 | 31 | — |
| 78 | 64 | 16 | 20 | 0.278 | 0.028 | 75 | 0.198 | 78 | PE-510 | 205 | — | — | — | — | — | 1.3 | 31 | — |
| 79 | 64 | 16 | 20 | 0.278 | 0.174 | 62 | 0.421 | 151 | PE-510 | 25 | I63 | 74 | WRH | 138 | — | 6.8 | 178 | — |
| 80 | 64 | 16 | 20 | 0.278 | 0.174 | 62 | 0.421 | 151 | PE-510 | 26 | I63 | 107 | WRH | 138 | — | 3.1 | 112 | — |
| 81 | 64 | 16 | 20 | 0.278 | 0.174 | 62 | 0.446 | 126 | PE-510 | 51 | I63 | 107 | WRH | 138 | — | 2.7 | 54 | — |
| 82 | 64 | 16 | 20 | 0.278 | 0.174 | 62 | 0.421 | 151 | PE-510 | 26 | I52 | 134 | WRH | 138 | — | 3.1 | 164 | — |
| 83 | 64 | 16 | 20 | 0.278 | 0.174 | 63 | 0.198 | 71 | PE-510 | 203 | T/20 | 27 | — | — | — | 1.3 | 34 | — |

*based on total adhesive solids

0 141 504

Preferred is also a tape wherein the adhesive consists essentially of 100 parts of a butyl acrylate:acrylic acid copolymer having a COOH equivalent in the range of 0.25 to 0.45, sufficient NaOH to provide 0.02—0.2 OH equivalent, sufficient KOH to provide 0.1—0.6 OH equivalent, 50—250 parts of plasticizer, and 0.08—0.50% by weight polyamide-epichlorohydrin resin crosslinker based on total adhesive solids.

Those persons skilled in the art will recognize that it is not feasible to set forth all the variations to which this invention is susceptible, and many modifications will readily suggest themselves, especially if certain principles are borne in mind. For example, the shorter the chain length of the alcohol from which the acrylate monomer is derived, the firmer the resultant pressure-sensitive adhesive. If a softer adhesive is desired, the chain length of the alcohol may be increased. If greater shear strength for an adhesive made with a given copolymer is desired, a higher molecular weight, as evidenced by a higher inherent viscosity, can be used; alternatively, a small amount of a crosslinking agent can be incorporated if repulpability is not compromised in the final adhesive.

Other monomers such as fumarates may be incorporated to provide side chain attachments to the polymer backbone through pendent ester linkages in the same manner as acrylate esters.

It will likewise be recognized that, to achieve specific results, it may be desirable to incorporate minor amounts of monomeric modifiers into copolymers used to formulate adhesives of the invention, for example, styrene or methyl methacrylate increases firmness, tertiary butyl styrene increases tack, etc. Similarly, dyes, pigments, fillers, etc. may be added where necessary or desirable.

Although this information has been particularly described with respect to a splicing tape for papermaking and printing operations, the pressure-sensitive adhesive has many other uses. For example, water-soluble adhesive labels may be applied to dishes, windows, or other surfaces which it is common to clean with aqueous solvent. Cloth labels coated with this adhesive may readily be washed from garments to which they are affixed. Likewise, since the adhesive is substantially insoluble in most oils or similar hydrocarbon solvents, it may be employed in applications where conventional normally tacky and pressure-sensitive adhesive tapes prove unsatisfactory.

**Claims**

1. Normally tacky and pressure-sensitive water-dispersible adhesive especially suitable for splicing carbonless paper, comprising the reaction product of
    (a) 100 parts by weight of a copolymer of monomers consisting essentially of

    (1) 60—85 weight percent of at least one monomeric acrylic acid ester of nontertiary alkyl alcohol having 4—14 carbon atoms, and, correspondingly,
    (2) 40—15 weight percent of vinyl carboxylic acid,

    (b) 50 to 250 parts by weight of ethoxylated plasticizing components, sufficient to impart adhesive values such as to cause the adhesive to delaminate kraft paper, consisting essentially of at least one of the following:

    (1) up to 125 parts by weight, but not so much as to cause adhesive separation, of one or more OH-functional ethoxylated plasticizers and
    (2) one or more electrolyte-tolerant complex acidic esters of phosphoric acid and an ethoxylated nonionic surfactant, and

    (c) alkaline hydroxide consisting essentially of

    (1) sodium hydroxide, lithium hydroxide, or both sodium hydroxide and lithium hydroxide, in an amount sufficient to enhance shear strength and minimize bleeding but insufficient to cause separation of any OH-functional ethoxylated plasticizer present, not exceeding 0.07 hydroxyl equivalent if OH-functional ethoxylated plasticizer is the only plasticizing component present, and
    (2) potassium hydroxide in an amount sufficient to promote water solubility.

2. The adhesive of claim 1 wherein the total amount of sodium hydroxide and lithium and hydroxide provides from 0.02 to 0.2 hydroxyl equivalent and the potassium hydroxide provides from 0.1 to 0.6 hydroxyl equivalent.

3. The adhesive of claim 1 wherein the reaction product consists essentially of
    (a) 100 parts by weight of a copolymer of monomers consisting essentially of

    (1) 60—85 weight percent of at least one monomeric acrylic acid ester of nontertiary alkyl alcohol having 4—14 carbon atoms, and, correspondingly.
    (2) 40—15 weight percent of vinyl carboxylic acid,

    (b) 100 to 250 parts by weight of ethoxylated plasticizing components, of which

(1) at least 50 parts by weight are one or more acidic esters of phosphoric acid and ethoxylated alcohol or phenol derivative and

(2) the balance is made up of one or more ethoxylated diamines, and

(c) sufficient sodium hydroxide to neutralize at least 20% of the copolymer acid function.

4. The adhesive of claim 3 wherein the acrylic acid ester comprises butyl acrylate and the vinyl carboxylic acid comprises acrylic acid.

5. Normally tacky and pressure-sensitive adhesive tape comprising a layer of the adhesive of claim 3 coated on a sheet backing.

6. The tape of claim 5 wherein a tackifying rosin or rosin derivative is included in the adhesive.

7. The tape of claim 5 wherein 0.08—0.50 weight percent of polyamide-epichlorohydrin crosslinking resin is included in the adhesive.

8. The tape of claim 5 wherein the adhesive consists essentially of 100 parts of a butyl acrylate:acrylic acid copolymer having a COOH equivalent in the range of 0.25 to 0.45, sufficient NaOH to provide 0.02—0.2 OH equivalent, sufficient KOH to provide 0.1—0.6 OH equivalent, 50—250 parts of plasticizer, and 0.08—0.50% by weight polyamide-epichlorohydrin resin crosslinker based on total adhesive solids.

9. The adhesive of claim 1 wherein the plasticizing components include both OH-functional ethoxylated plasticizer and acidic ester of phosphoric acid and ethoxylated alcohol or phenol derivative.

10. The adhesive of claim 9 wherein 50 to 100 parts by weight of oily ethoxylated plasticizer are present.

11. The adhesive of claim 10 wherein 50 to 100 parts by weight of the phosphoric acid ester are present.

12. The adhesive of claim 11 wherein from 75 to 150 parts by weight of rosin or rosin derivative are present.

13. Normally tacky and pressure-sensitive adhesive tape comprising a layer of the adhesive of claim 12 coated on a sheet backing.

14. The tape of claim 13 wherein 0.08—0.50 weight percent of polyamide-epichlorohydrin resin crosslinker is included in the adhesive.

**Patentansprüche**

1. In Wasser dispergierbarer und normalerweise klebriger und selbstklebender Klebstoff, der besonders zum Spleißen von kohlenstoffreiem Papier geeignet ist und mindestens teilweise aus dem Reaktionsprodukt folgender Substanzen besteht:

(a) 100 Gewichtsteile aus einem Copolymer von Monomeren, die im wesentlichen bestehen aus

(1) 60 bis 85 Gew.% mindestens eines monomeren Esters der Acrylsäure und eines nichttertiären Alkylalkohols, der 4 bis 14 Kohlenstoffatome enthält und entsprechend

(2) 40 bis 15 Gew.-% Vinylcarbonsäure,

(b) 50 bis 250 Gewichtsteile ethoxylierte Weichmacherkomponenten in einer solchen Menge, daß solche Adhäsionswerte erhalten werden, daß der Klebstoff zur Schichtenspaltung von Kraftpapier geeignet ist, wobei diese Weichmacherkomponenten im wesentlichen aus mindestens einer der nachstehenden Substanzen bestehen:

(1) bis zu 125 Gewichtsteile aus einem oder mehreren OH-funktionellen ethoxylierten Weichmachern, deren Menge aber nicht so groß ist, daß sie eine Trennung des Klebstoffes bewirken, und

(2) eine oder mehrere elektrolytverträgliche komplexe saure Ester der Phosphorsäure und eines ethoxylierten nichtionischen Tensids, und

(c) ein Alkalihydroxid, das im wesentlichen besteht aus

(1) Natriumhydroxid und/oder lithiumhydroxid in einer solchen Menge, daß das Hydroxid die Scherfestigkeit verbessert und das Durchschlagen auf ein Minimum herabsetzt, wobei diese Menge aber nicht so groß ist, daß sie die Abtrennung eines etwa vorhandenen OH-funktionellen ethoxylierten Weichmachers bewirkt, und die genannte Menge nicht größer ist als 0,07 Hydroxyläquivalentmassen, wenn der OH-funktionelle ethoxylierte Weichmacher die einzige vorhandene Weichmacherkomponente ist, und

(2) Natriumhydroxid in einer Menge, die zum Fördern der Löslichkeit in Wasser genügt.

2. Klebstoff nach Anspruch 1, dadurch gekennzeichnet, daß die Gesamtmenge des Natriumhydroxids und Lithiumhydroxids 0,02 bis 0,2 Hydroxyl-Äquivalentmassen entspricht und die Menge des Kaliumhydroxids 0,1 bis 0,6 Hydroxyläquivalentmassen entspricht.

3. Klebstoff nach Anspruch 1, dadurch gekennzeichnet, daß das Reaktionsprodukt im wesentlichen besteht aus:

(a) 100 Gewichtsteilen eines Copolymers von Monomeren, die im wesentlichen bestehen aus

(1) 60 bis 85 Gew.% mindestens eines monomeren Esters der Acrylsäure und eines nichttertiären Alkylalkohols, der 4 bis 14 Kohlenstoffatome enthält und entsprechend

(2) 40 bis 15 Gew.% Vinylcarbonsäure,

(b) 100 bis 250 Gewichtsteilen ethoxylierte Weichmacherkomponenten, von denen

(1) mindestens 50 Gew.% aus einem oder mehreren sauren Estern der Phosphorsäure und eines ethoxylierten Alkohol- oder Phenolderivats bestehen und

(2) der Rest aus einem oder mehreren ethoxylierten Diaminen besteht, und

(c) Natriumhydroxid in einer zum Neutralisieren von mindestens 20% der Copolymersäurefunktion genügenden Menge.

4. Klebstoff nach Anspruch 3, dadurch gekennzeichnet, daß der Acrylsäureester mindestens teilweise aus Butylacrylat und die Vinylcarbonsäure mindestens teilweise aus Acrylsäure besteht.

5. Nomalerweise klebriges und selbstklebendes Klebeband, in dem auf eine blattförmige Tragschicht eine Schicht aus dem Klebstoff nach Anspruch 3, aufgetragen ist.

6. Band nach Anspruch 5, dadurch gekennzeichnet, daß der Klebstoff klebrigmachendes Kolophonium oder Kolophoniumderivat enthält.

7. Band nach Anspruch 5, dadurch gekennzeichnet, daß der Klebstoff in einer Menge von 0,08 bis 0,50 Gew.% ein Vernetzungsmittel für Polyamid-Epichlorhydrin-Harze enthält.

8. Band nach Anspruch 5, dadurch gekennzeichnet, daß der Klebstoff auf das Gesamtgewicht der Klebstoffeststoffe bezogen im wesentlichen aus 100 Teilen aus einem Butylacrylat-Acrylsäure-Copolymer besteht, das eine COOH-Äquivalentmasse im Bereich von 0,25 bis 0,45 besitzt, ferner aus NaOH in einer 0,02 bis 0,2 OH-Äquivalentmassen entsprechenden Menge, aus KOH in einer 0,1 bis 0,6 OH-Äquivalentmassen entsprechenden Menge, aus 50 bis 250 Teilen Weichmacher und in einer Menge von 0,08 bis 0,50 Gew.% aus einem Vernetzungsmittel für Polyamid-Epichlorhydrin-Harze.

9. Klebstoff nach Anspruch 1, dadurch gekennzeichnet, daß die Weichmacherkomponenten sowohl einen OH-funktionellen ethoxylierten Weichmacher als auch einen sauren Ester der Phosphorsäure und eines ethoxylierten Alkohol- oder Phenolderivats enthalten.

10. Klebstoff nach Anspruch 9, dadurch gekennzeichnet, daß in einer Menge von 50 bis 100 Gewichtsteilen ein öliger ethoxylierter Weichmacher vorhanden ist.

11. Klebstoff nach Anspruch 10, dadurch gekennzeichnet, daß der Phosphorsäureester in einer Menge von 50 bis 100 Gewichtsteilen vorhanden ist.

12. Klebstoff nach Anspruch 11, dadurch gekennzeichnet, daß das Kolophonium oder Kolophoniumderivat in einer Menge von 75 bis 150 Gewichtsteilen vorhanden ist.

13. Normalerweise klebriges und selbstklebendes Klebband, in dem auf eine blattförmige Tragschicht eine Schicht aus dem Klebstoff nach Anspruch 12 aufgetragen ist.

14. Band nach Anspruch 13, dadurch gekennzeichnet, daß der Klebstoff ein Vernetzungsmittel für Polyamid-Epichlorhydrin-Harze enthält.

**Revendications**

1. Adhésif normalement poisseux, sensible à la pression et dispersible dans l'eau, convenant particulièrement au raccordement de papier sans carbone, comprenant le produit de la réaction de

(a) 100 parties en poids d'un copolymère de monomères consistant essentiellement en

(1) 60 à 85% en poids d'au moins un ester d'acide acrylique monomère d'un alcool alkylique non tertiaire comportant 4 à 14 atomes de carbone, et, en correspondance,

(2) 40 à 15% en poids d'acide vinyl-carboxylique,

(b) 50 à 250 parties en poids de composants de plastification éthoxylés, en quantité suffisante pour engendrer des valeurs d'adhérence telles que l'adhésif soit capable de délaminer du papier kraft, consistant essentiellement en au moins l'un des composants suivants:

(1) jusqu'à 125 parties en poids, mais pas en quantité suffisante pour provoquer la séparation de l'adhésif, d'un ou plusieurs plastifiants éthoxylés à fonction OH et

(2) un ou plusieurs esters acides complexes à tolérance d'électrolyte de l'acide phosphorique et d'un agent tensioactif non ionique éthoxylé, et

(c) un hydroxyde alcalin consistant essentiellement en

(1) hydroxyde de sodium, hydroxyde de lithium, ou à la fois hydroxyde de sodium et de lithium, en quantité suffisante pour augmenter la résistance au cisaillement et minimiser la migration mais insuffisante pour provoquer la séparation de tout plastifiant éthoxylé à fonction OH présent, de dépassant pas 0,07 équivalent hydroxyle si le plastifiant éthoxylé à fonction OH est le seul composant plastifiant présent et

(2) hydroxyde de potassium en quantité suffisante pour engendrer une solubilité dans l'eau.

2. Adhésif suivant la revendication 1, dans lequel la quantité totale d'hydroxyde de sodium et d'hydroxyde de lithium représente de 0,02 à 0,2 équivalent hydroxyle et l'hydroxyde de potassium représente de 0,1 à 0,6 équivalent hydroxyle.

3. Adhésif suivant la revendication 1, dans lequel le produit de la réaction est composé essentiellement de

(a) 100 parties en poids d'un copolymère de monomères consistant essentiellement en

(1) 60 à 85% en poids d'au moins un ester d'acide acrylique monomère d'un alcool alkylique non tertiaire comportant 4 à 14 atomes de carbone, et, en correspondance

(2) 40 à 15% en poids d'acide vinyl-carboxylique,

(b) 100 à 250 parties en poids de composants de plastification éthoxylés dont

(1) au moins 50 parties en poids sont un ou plusieurs esters acides d'acide phosphorique et d'alcool éthoxylé ou de dérivé phénolique et

(2) le solde est constitué d'une ou plusieurs diamines éthoxylés, et

(c) suffisamment d'hydroxyde de sodium pour neutraliser au moins 20% de la fonction acide du copolymère.

4. Adhésif suivant la revendication 3, dans lequel l'ester d'acide acrylique est l'acrylate de butyle et l'acide vinyl-carboxylique est l'acide acrylique.

5. Ruban adhésif normalement poisseux et sensible à la pression, comprenant une couche de l'adhésif de la revendication 3 appliqué sur une feuille support.

6. Ruban suivant la revendication 5, dans lequel une colophane ou un dérivé de colophane poisseux est inclus dans l'adhésif.

7. Ruban suivant la revendication 5, dans lequel 0,08 à 0,50% en poids de résine de réticulation de type polyamide-épychlorhydrine est incorporée dans l'adhésif.

8. Ruban suivant la revendication 5, dans lequel l'adhésif comprend essentiellement 100 parties d'un copolymère de butylacrylate-acide acrylique ayant un équivalent COOH dans la plage de 0,25 à 0,45, suffisamment de NaOH pour obtenir un équivalent OH de 0,02 à 0,2, suffisamment de KOH pour obtenir un équivalent OH de 0,1 à 0,6, 50 à 250 parties de plastifiant et 0,08 à 0,50% en poids de résine de réticulation polyamide-épichlorhydrine sur la base des matières solides totales de l'adhésif.

9. Adhésif suivant la revendication 1, dans lequel les composants de plastification comprennent à la fois un plastifiant éthoxylé à fonction OH et un ester acide d'acide phosphorique et d'alcool éthoxylé ou de dérivé du phénol.

10. Adhésif suivant la revendication 9, dans lequel il y a 50 à 100 parties en poids de plastifiant éthoxylé huileux.

11. Adhésif suivant la revendication 10, dans lequel il y a 50 à 100 parties en poids de l'ester d'acide phosphorique.

12. Adhésif suivant la revendication 11, dans lequel il y a 75 à 150 parties en poids de colophane ou de dérivé de colophane.

13. Ruban adhésif normalement poisseux et sensible à la pression, comprenant une couche de l'adhésif de la revendication 12 appliquée sur une feuille support.

14. Ruban suivant la revendication 13, dans lequel il y a 0,08 à 0,50% en poids de résine de réticulation polyamide-épichlorhydrine dans l'adhésif.

14